# EUROPEAN PATENT SPECIFICATION

(11) **EP 2 202 877 B1**
(45) Date of publication and mention of the grant of the patent: **23.11.2016**
(21) Application number: 09015999.7
(22) Date of filing: 24.12.2009
(51) Int. Cl.: B25F 5/00, H05K 1/18, B25F 5/02, H02K 11/33

(54) **Electric power tools**
Elektrische Werkzeuge
Outils électriques

(30) Priority: 26.12.2008 JP 2008333526
(43) Date of publication of application: 30.06.2010
(73) Proprietor: Makita Corporation, Anjo, Aichi 446-8502 (JP)
(72) Inventor: Matsunaga, Yutaka, Anjo, Aichi 446-8502 (JP); Kusakawa, Takuya, Anjo, Aichi 446-8502 (JP); Omura, Motohiro, Anjo, Aichi 446-8502 (JP)
(74) Representative: Kramer Barske Schmidtchen Patentanwälte PartG mbB

(56) References cited:
- WO-A2-2006/050377
- JP-A- 2003 305 667
- US-B1- 6 536 536

## Description

The present invention relates to electric power tools including a housing body part for housing a brushless DC motor as a driving source, a grip part formed to protrude from a lateral part of the housing body part, a switch part provided in a position allowing a user to engage the switch part by his or her finger while the user holds the grip part, a battery that supplies a power to the blushless DC motor, a three-phase bridge circuit for controlling the blushless DC motor, a switching device constituting a part of the three-phase bridge circuit part, and a capacitor connected in parallel with the three-phase bridge circuit.

In many electric power tools such as a driver or a drill for tightening screws or drilling holes, a voltage applied to a motor can be changed in order to control the rotational speed of the motor depending on a pull position of a switch that includes a trigger operation part.

In general, a switching device is controlled by a pulse-width modulation (PWM) to vary the voltage supplied to a motor. When the switching device is driven by this pulse-width modulation, a surge voltage occurs. Further, when the voltage applied to the motor is controlled by the pulse-width modulation, the more the current flows to the switching device, the more the surge voltage increases. Especially, when an on-off control of large current is made by the switching device in order to control the rotational speed of a high-powered motor that may be installed in an electric power tool, a surge voltage that will occur becomes large. In order to absorb this surge voltage, a capacitor is connected in parallel with a three-phase bridge circuit part that includes the switching device.

A switching device whose withstand voltage is high is relatively large in size, and one whose withstand voltage is low is relatively small in size. The usage of a small-sized switching device with low withstand voltage advantageously allows for compact storage of these switching devices, but maximum current is restricted to suppress the surge voltage and a large capacitor with high capacity is required. That is, compactification of the switching device causes the capacitor to become large in size.

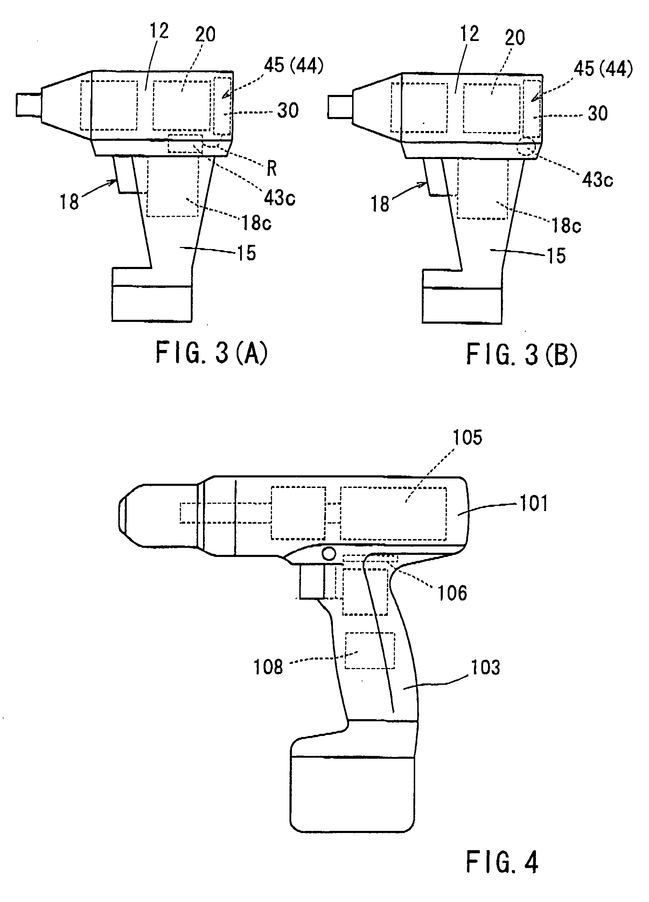

In an electric power tool as described in Japanese Laid-Open Patent Publication No. 2003-305667, a capacitor 108 is located in the lower section of a grip part 103 as shown in FIG.4 in order to use a capacitor with high capacity. Further, an electrical circuit board 106, on which a three-phase bridge circuit part including the switching device is mounted, is arranged at a boundary region between a housing body part 101 and the grip part 103 in the vicinity of a blushless DC motor 105.

In the known electric power tool as described above, a long distance from the electrical circuit board 106, on which the three-phase bridge circuit part is mounted, to the capacitor 108 results increase in length of a lead wire that connects between the electrical circuit board 106 and the capacitor 108. A lead wire can be equivalently represented by a resistance component (R) and an inductance component (L). If the length of the lead wire increases, the resistance component (R) and the inductance component (L) become large in proportion to the length. Especially, if the inductance component (L) becomes large, a surge voltage (e=Ldi/dt), which will be produced when the switching device is operated, will become large.

For this reason, if the lead wire is long and the current applied to the switching device during the pulse-width modulation control is large, this may adversely affect when determining a withstand voltage of the switching device and a capacity of the capacitor connected in parallel with the three-phase bridge circuit part

Further, in the case that a switching device is used with relatively small in size and with low withstand voltage, a current applied to the switching device must be controlled and performance cannot be fully elicited from a high-powered motor that may be installed in an electric power tool. Further, this may adversely affect to increase a battery voltage.
WO 2006/050377 A2 discloses another hand-held power tool.

Therefore, there is a need in the art for a power tool that can lower a withstand voltage of a switching device as much as possible and enables a capacity of a capacitor to be decreased as small as possible by suppressing a surge voltage caused by the operation of the switching device.

This object is achieved by an electric power tool according to claim 1. Further developments of the invention are given in the dependent claims. A capacitor is positioned closer to a motor control circuit than to a switch electrically connected to the motor control circuit.

Additional objects, features, and advantages, of the present invention will be readily understood after reading the following detailed description together with the claims and the accompanying drawings, in which:
FIG.1 1 is a vertical sectional view of an electric power tool according to an exemplary embodiment of an electric power tool;
FIG.2 is a schematic showing a configuration of the motor drive circuit of a brushless DC motor of the electric power tool;
FIG.3(A) and FIG. 3(B) are schematic views showing electric power tools according to alternative embodiments; and
FIG. 4 is a schematic view showing a known electric power tool.

Each of the additional features and teachings disclosed above and below may be utilized separately or in conjunction with other features and teachings to provide improved electric power tools. Representative examples of the present invention, which examples utilize many of these additional features and teachings both separately and in conjunction with one another, will now be described in detail with reference to the attached drawings. This detailed description is merely intended to teach a person of skill in the art further details for practicing preferred aspects of the present teachings and is not intended to limit the scope of the invention. Only the claims define the scope of the claimed invention. Therefore, combinations of features and steps disclosed in the following detailed description may not be necessary to practice the invention in the broadest sense, and are instead taught merely to particularly describe representative examples of the invention. Moreover, various features of the representative examples and the dependent claims may be combined in ways that are not specifically enumerated in order to provide additional useful embodiments of the present teachings.

In one embodiment, an electric power tool includes a housing body part for housing a brushless DC motor as a driving source, a grip part formed to protrude from a lateral part of the housing body part, a switch part provided in a position allowing a user to engage the switch part by his or her finger while the user holds the grip part, a battery that supplies a power to the brushless DC motor, a three-phase bridge circuit for controlling the brushless DC motor, a switching device constituting a part of the three-phase bridge circuit, and a capacitor connected in parallel with the three-phase bridge circuit. The three-phase bridge circuit is disposed proximate to the brushless DC motor in the housing body part, and the capacitor is disposed at a position located closer to the three-phase bridge circuit than to the switch part. The electric power tool further includes an electric conductor that electrically connects the capacitor and the three-phase bridge circuit, and the three-phase bridge circuit is configured to connect the capacitor and the three-phase bridge circuit at the shortest distance.

With this arrangement, the capacitor is disposed at a position proximate to the switch part or located closer to the three-phase bridge circuit than to the switch part. That is, the capacitor is located in the vicinity of the three-phase bridge circuit. Further, an electric conductor such as a lead wire is configured such that the capacitor and the three-phase circuit are connected at the shortest distance. Thus, the length of the electric conductor such as a lead wire that connects the capacitor and the three-phase bridge circuit can be made as short as possible. Consequently, the inductance component (L) of the electric conductor becomes small and a surge voltage, which is caused by the inductance component (L) when an operation of the switching device having the three-phase bridge circuit part is made, becomes small (e=Ldi/dt). Therefore, the withstand voltage of the switching device becomes small and the capacity of the capacitor becomes relatively small.

Therefore, a withstand voltage of the switching device can be lowered and the capacity of a capacitor can be made relatively small as much as possible by suppressing a surge voltage caused by the operation of the switching device.

The three-phase bridge circuit may be positioned on a rear side of the brushless DC motor and the capacitor is mounted on an electrical circuit board of the switch part or to terminals thereof.

Since the three-phase bridge circuit part is positioned on a rear side of the brushless DC motor in this way, the switching device can be effectively cooled down by a motor cooling fan.

Further, since the capacitor is mounted on the electrical circuit board of the switch part or to the terminals thereof and is located outside the housing body part, the housing body part can be made compact.

The three-phase bridge may be positioned on a rear side of the brushless DC motor and the capacitor may be positioned at the boundary region between the housing body part and the grip part.

Thus, since the capacitor is positioned at the boundary region between the housing body part and the grip part, the lead wire etc. can be made short in comparison with the case where the capacitor is mounted on the electrical circuit board of the switch part.

The three-phase bridge circuit may be located in the rear of the brushless DC motor and the capacitor is mounted on the electrical circuit board on which the three-phase bridge circuit part is mounted.

Thus, the length of the electric conductor between the capacitor and the three-phase bridge circuit part can be minimized.

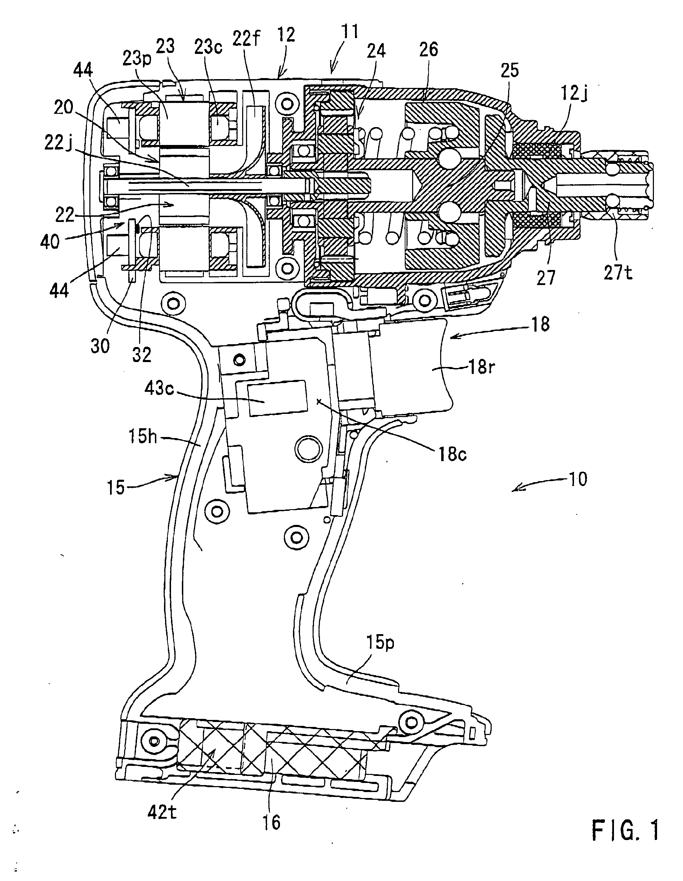

An electric power tool according to an embodiment of the invention will be described with reference to FIG.1 1 to FIG.3 (A) and FIG. 3(B). The position of the capacitor shown in Fig. 1 is not covered by the claims. The electric power tool of the embodiment is a rotary impact tool, in particular, an impact driver that is driven by a brushless DC motor.

As shown in FIG.1, a housing 11 of an electric power tool 10 according to the present embodiment includes a tubular housing body part 12, and a grip part 15 formed to protrude from a lateral part of the housing body part 12 (lower part in FIG.1). The grip part 15 includes a handgrip part 15h that can be grasped by a user when using the electric power tool 10, and a lower part 15p located on the side of the protruding end (lower end) of the handgrip part 15h. A trigger switch part 18 is provided at the base end portion of the handgrip part 15h and can be pulled by a user with his or her finger.

Further, the lower part 15p of the grip part 15 can be opened in a front-back direction with respect to the handgrip part 15h, and a connecting part 16 for a battery pack is provided on the lower side of the lower part 15p for connecting the battery pack (not shown).

Within the housing body part 12, a brushless motor 20, a planetary gear train 24, a spindle 25, a striking power generation mechanism 26, and an anvil 27 are housed coaxially in this order from the rear side of the housing body part 12. A rotative power of the brushless DC motor 20 is transmitted to the spindle 25 via the planetary gear train 24, a rotative power of the spindle 25 is converted into a rotary striking power by the striking power generation mechanism 26, and then the rotary striking power is transmitted to the anvil 27. The anvil 27 is supported by a bearing 12j provided at the front end of the housing body part 12, so that the anvil 27 can rotate about an axis but cannot move in an axial direction. At the front end of the anvil 27, a chuck part 27t is provided, so that a driver bit or a socket bit, and the like (not shown) can be attached to the chuck part 27t.

As shown in FIG. 1, the brushless DC motor 20 includes a rotor 22 having a permanent magnet, and a stator 23 having a drive coil 23c. A motor cooling fan 22f is coaxially mounted to a rotational shaft 22j of the motor 22 at a position on a front side of the stator 23. The stator 23 includes a tubular part (not shown), and six tooth parts 23p radially protruding inward from an inner circumference surface of the cylindrical part. Drive coils 23c is wound around the tooth parts 23p via an insulating material.

Further, in a rear end part of the stator 23, three magnetic sensors 32 for detecting the positions of magnetic poles of the rotor 22, a three-phase bridge circuit part 45 of a motor drive circuit 40, etc., are mounted on an electrical circuit board 30. Thus, current can be supplied to the drive coils 23c in order by the motor drive circuit 40 to rotate the rotor 22 while the positions of the magnetic poles of the rotor 22 are detected by the magnetic sensors 32.

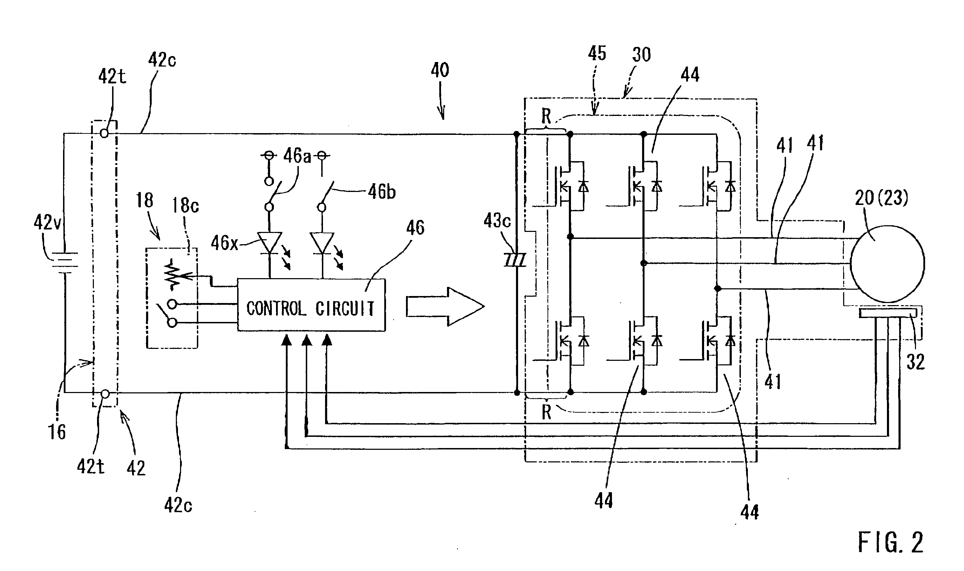

As shown in FIG.2, the motor drive circuit 40 of the brushless DC motor 20 includes a power supply part 42, the three-phase bridge circuit part 45 including six switching devices 44, a control circuit part 46 that controls the switching devices 44 of the three-phase bridge circuit part 45. The power supply part 42 is a part that receives the power supplied to the electric power tool 10 from a battery 42v inside the battery pack via terminals 42t of the battery pack connection part 16. The power supply part 42 includes power wires 42c connected to the terminal 42t and a capacitor 43c connected in parallel with the power wires 42c

The three-phase bridge circuit part 45 is connected to the power wires 42c in parallel with the capacitor 43c, and three output lines 41 from the three-phase bridge circuit part 45 (hereinafter referred to as power lines 41) are connected to the corresponding windings of the drive coils 23c. For example, field effect transistors (FET) may be used as switching devices 44 of the three-phase bridge part 45.

The control circuit part 46 is constituted by an electronic parts such as a microcomputer, an IC or the like that can operate the switching devices 44 based on an actuating signal from the trigger switch part 18. The control circuit part 46 receives signals from the above-described three magnetic sensors 32, and based on these signals (see an outline arrow in FIG. 2), the control circuit part 46 performs an on/off operation of each of the switching devices 44 constituting the three-phase bridge circuit part 45. Thus, current may be supplied to the drive coils 23c of the brushless DC motor 20 in order at a predetermined switching rate.

Further, signals from various switches, such as switches 46a and 46b for switching the tightening speed of fasteners driven by the tool are input to the control circuit part 46.

As shown in FIG.1, the trigger switch part 18 includes a trigger lever 18r and an electrical circuit board 18c that can convert the movement of the trigger lever 18r into an electric signal and transmit it to the control circuit part 46. The capacitor 43c of the power supply part 42 is mounted on the electrical circuit board 18c in an electrically isolated state.

The capacitor 43c is connected by the power wires 42c (at lead wire parts R in FIG.2) in parallel with the three-phase bridge circuit part 45 mounted on the electrical circuit board 30 provided in the rear end part of the stator 23. The lead wire parts R connected between the capacitor 43c and the three-phase bridge circuit part 45 are wired to have the shortest distance within the housing 11. That is, the power wires 42c (including the lead wire parts R) serves as the electric conductors.

In the electronic power tool 10 of Fig. 1, the capacitor 43c is located in the vicinity of the switch 18. That is, the capacitor 43c is located relatively close to the three-phase bridge circuit part 45. Further, the electric conductors such as the lead wire parts R are configured to connect between the capacitor 43c and the three-phase bridge circuit part 45 at the shortest distance. Thus, the length of the lead wire parts R (electric conductors) that connect between the capacitor 43c and the three-phase bridge circuit part 45 can be made as short as possible. Consequently, the inductance component (L) of the lead wire parts R (electric conductors) becomes smaller, and a surge voltage that may be caused by the inductance component (L) when the switching device 44 is operated can be lowered. Therefore, the withstand voltage of the switching device 44 can be lowered, and further the capacitance of the capacitor 43c can be relatively small.

Further, since the three-phase bridge circuit part 45 is located on the rear side of the brushless DC motor 20, the switching device 44 can be effectively cooled down by the motor cooling fan 22f. In addition, since the capacitor 43c is mounted on the electrical circuit board 18c of the switch part 18 and is located outside the housing body part 12, the housing body part 12 can be made compact.

In the above exemplary embodiment of Fig. 1, the capacitor 43c is mounted on the electrical circuit board 18c of the switch part 18, but as shown in FIG.3(A), it is possible to locate the capacitor 43c at the boundary region between the housing body part 12 and the grip part 15. Thus, the length of the lead wire parts R can be minimized compared with the case where the capacitor 43c is mounted on the electrical circuit board 18c of the switch part 18.

Further, as shown in FIG.3(B), it is possible to mount the capacitor 43c on the electrical circuit board 30 on which the three-phase bridge circuit part 45 is mounted. Thus, the length of the electric conductors between the capacitor 43c and the three-phase bridge circuit part 45 can be minimized.

In the above embodiments, the rotary impact tool (an impact driver) as an example of the electric power tool is driven by the brushless DC motor 20. However, the present invention can be applied to any other power tool, such as an electric screwdriver and an electric drill, having a brushless DC motor.

## Claims

1. An electric power tool (10), comprising:
a housing body part (12) capable of housing a brushless DC motor (20) as a driving source;
a grip part (15) formed to protrude from a lateral part of the housing body part (12);
a switch part (18) provided in such a position that allows a user to engage a finger of the user with the switch part (18) while the user holds the grip part (15);
a battery (42v) capable of supplying a power to the brushless DC motor (20);
a three-phase bridge circuit (45) configured to control the brushless DC motor (20) and including switching device (44);
a capacitor (43c) connected in parallel with the three-phase bridge circuit (45); and
electric conductors (42c) electrically connecting between the capacitor (43c) and the three-phase bridge circuit (45),
**characterized in that**
the three-phase bridge circuit (45) is disposed proximal to the brushless DC motor (20) within the housing body part (12), the capacitor (43c) is disposed at a position closer to the three-phase bridge circuit (45) than the switch part (18), and the electric conductors (42c) are configured to connect the capacitor (43c) and the three-phase bridge circuit (45) at the shortest distance.

2. The electric power tool (10) according to claim 1, wherein the switch part (18) is positioned on a front side of the housing body part (12), the three-phase bridge circuit (45) is positioned on a rear side of the brushless DC motor (20), and the capacitor (43c) is mounted on an electrical circuit board (30) having the three-phase bridge circuit (45) mounted thereon.

3. The electric power tool (10) according to claim 1 or 2, wherein the electric power tool (10) is a rotary impact driver.

## Patentansprüche

1. Elektrisches Kraftwerkzeug (10), mit:
einem Gehäusekörperteil (12), der zum Aufnehmen eines bürstenlosen Gleichstrommotor (20) als eine Antriebsquelle geeignet ist,
einem Griffteil (15), der dazu ausgebildet ist, von einem seitlichen Teil des Gehäusekörperteils (12) vorzustehen;
einem Schalterteil (18), der in einer derartigen Position vorgesehen ist, die einem Benutzer erlaubt, einen Finger des Benutzers mit dem Schalterteil (18) in Eingriff zu bringen, während der Benutzer den Griffteil (15) hält;
einer Batterie (42v), die imstande ist, dem bürstenlosen Gleichstrommotor (20) eine Leistung zuzuführen;
einer 3-Phasen-Brückenschaltung (45), die dazu ausgebildet ist, den bürstenlosen Gleichstrommotor (20) zu steuern, und Schaltvorrichtungen (44) aufweist;
einem Kondensator (43c), der parallel zu der 3-Phasen-Brückenschaltung (45) verbunden ist; und
elektrischen Leitern (42c), die elektrisch zwischen dem Kondensator (43c) und der 3-Phasen-Brückenschaltung (45) verbinden,
**dadurch gekennzeichnet, dass**
die 3-Phasen-Brückenschaltung (45) nahe dem bürstenlosen Gleichstrommotor (20) innerhalb des Gehäusekörperteils (12) angeordnet ist, der Kondensator (43c) an einer Position näher an der 3-Phasen-Brückenschaltung (45) als der Schalterteil (18) angeordnet ist, und die elektrischen Leiter (42c) dazu ausgebildet sind, den Kondensator (43c) und die 3-Phasen-Brückenschaltung (45) mit kürzestem Abstand zu verbinden.

2. Elektrisches Kraftwerkzeug (10) nach Anspruch 1, bei dem der Schalterteil (18) auf einer Vorderseite des Gehäusekörperteils (12) positioniert ist, die 3-Phasen-Brückenschaltung (45) auf einer Rückseite des bürstenlosen Gleichstrommotors (20) positioniert ist, und der Kondensator (43c) auf einer elektrischen Leiterplatte (30) mit der darauf montierten 3-Phasen-Brückenschaltung (45) montiert ist.

3. Elektrisches Kraftwerkzeug (10) nach Anspruch 1 oder 2, bei dem das elektrische Kraftwerkzeug (10) ein Drehschlagschrauber ist.

## Revendications

1. Outil électrique (10), comprenant:
une partie de corps de boîtier (12) capable de contenir un moteur à courant continu sans balais (20) comme source d'entraînement;
une partie de préhension (15) formée de manière à faire saillie à partir d'une partie latérale de la partie de corps de boîtier (12);
une partie de commutateur (18) positionnée de manière à permettre à un utilisateur d'engager un doigt de l'utilisateur avec la partie de commutateur (18) pendant que l'utilisateur tient la partie de préhension (15);
une batterie (42v) capable de fournir de la puissance au moteur à courant continu sans balais (20);
un circuit en pont triphasé (45) configuré de manière à commander le moteur à courant continu sans balais (20) et comprenant des dispositifs de commutation (44);
un condensateur (43c) connecté en parallèle au circuit en pont triphasé (45); et
des conducteurs électriques (42c) qui établissent une connexion électrique entre le condensateur (43c) et le circuit en pont triphasé (45),
**caractérisé en ce que** le circuit en pont triphasé (45) est disposé à proximité du moteur à courant continu sans balais (20) à l'intérieur de la partie de corps de boîtier (12), le condensateur (43c) est disposé dans une position plus proche du circuit en pont triphasé (45) que la partie de commutateur (18), et les conducteurs électriques (42c) sont configurés de manière à connecter le condensateur (43c) et le circuit en pont triphasé (45) à la distance la plus courte.

2. Outil électrique (10) selon la revendication 1, dans lequel la partie de commutateur (18) est positionnée sur un côté avant de la partie de corps de boîtier (12), le circuit en pont triphasé (45) est positionné sur un côté arrière du moteur à courant continu sans balais (20), et le condensateur (43c) est monté sur un panneau de circuits électriques (30) présentant le circuit en pont triphasé (45) monté sur celui-ci.

3. Outil électrique (10) selon la revendication 1 ou 2, dans lequel l'outil électrique (10) est un outil d'entraînement à percussion rotatif.
